# DEMANDE DE BREVET EUROPEEN

(11) **EP 4 768 782 A1**
(43) Date de publication de la demande: **01.07.2026**
(21) Numéro de dépôt: 25227184.6
(22) Date de dépôt: 24.12.2025
(51) Int. Cl.: F21V 19/00, G01J 1/02, G01J 1/04, G01J 1/08

(54) **SPHERE INTEGRANTE DE FORTE LUMINANCE COMPATIBLE VIDE OU MILIEU AMBIANT**

(30) Priorité: 27.12.2024 FR 2415311
(71) Demandeur: THALES, 92190 Meudon (FR)
(72) Inventeur: MEYNARD, Maxime, 06150 CANNES LA BOCCA (FR); BAYLE, Arnaud, 06150 CANNES LA BOCCA (FR); JOFFRIN, Xavier, 06150 CANNES LA BOCCA (FR)
(74) Mandataire: Lavoix

(57) **Abrégé**

L'invention concerne une sphère intégrante comprenant un corps délimitant une chambre d'intégration et étant pourvu d'au moins deux fenêtres d'accès à la chambre d'intégration depuis l'extérieur du corps. Selon l'invention, le corps de la sphère intégrante comprend au moins un canal de refroidissement pour la circulation d'un fluide caloporteur.

## Description

La présente invention concerne une sphère intégrante de forte luminance utilisable à l'air ambiant ou dans une enceinte sous vide.

Une sphère intégrante également dénommée sphère d'Ulbricht est un composant optique comprenant une chambre ou cavité d'intégration dont la surface interne est recouverte d'un revêtement possédant un facteur de réflexion diffuse élevé pour les longueurs d'onde intérêt. La sphère comprend en outre des ports d'entrée et de sortie relativement petits par comparaison aux dimensions de la chambre d'intégration. Le plus souvent la chambre d'intégration présente une forme sphérique de sorte que les faisceaux lumineux provenant de n'importe quel point de la surface interne de la chambre d'intégration sont distribués, en raison des multiples réflexions diffuses qu'ils connaissent, de façon égale à tous les autres points de la sphère quelle que soit la direction d'origine de la lumière.

Ainsi une sphère intégrante peut être considérée comme un diffuseur qui conserve la puissance mais détruit la formation spatiale. Les sphères intégrantes sont utilisées soit comme source lumineuse soit comme système de mesure de la puissance optique d'une source lumineuse.

Dans une application préférée, l'invention se rapporte à une sphère intégrante utilisée comme source lumineuse. Une telle sphère intégrante comprend au minimum une fenêtre d'accès à la chambre d'intégration depuis l'extérieur pour la mise en place d'une source lumineuse telle qu'une ampoule à incandescence située à l'intérieur de la chambre d'intégration. La sphère intégrante comprend en outre une fenêtre d'accès à la chambre d'intégration ouverte vers l'extérieur permettant une sortie du rayonnement lumineux. Cette fenêtre de sortie forme alors une source lumineuse avec une intensité lumineuse apparente uniforme dans toutes les directions à l'intérieur de son ouverture.

Lorsqu'il est souhaité obtenir au niveau de la fenêtre de sortie une forte voire très forte intensité lumineuse, il est nécessaire de disposer, à l'intérieur de la chambre d'intégration, une ou plusieurs sources lumineuses de forte puissance. Les dimensions de la sphère intégrante et plus particulièrement de sa chambre d'intégration sont alors un facteur limitant compte tenu de la puissance thermique susceptible d'être dissipée par les sources lumineuses qui y sont disposées de sorte qu'il n'est pas possible d'atteindre de manière fiable et pérenne les hautes intensités lumineuses recherchées. En effet, les températures élevées régnant au sein de la chambre d'intégration avec la mise en œuvre de plusieurs sources lumineuses très puissantes affectent la durée de vie desdites sources lumineuses et donc la fiabilité du système. Les températures élevées affectent aussi le revêtement interne de la chambre d'intégration de sorte que la durée de vie et les performances optiques de ce revêtement sont fortement impactées.

Il est donc apparu le besoin d'un nouveau type de sphère intégrante qui permette d'atteindre des puissances lumineuses élevées voire très élevées tout en présentant des garanties de fiabilité satisfaisante.

Afin d'atteindre cet objectif l'invention concerne une sphère intégrante comprenant un corps délimitant une chambre d'intégration et étant pourvu d'au moins deux fenêtres d'accès à la chambre d'intégration depuis l'extérieur du corps, caractérisée en ce que le corps comprend au moins un canal de refroidissement pour la circulation d'un fluide caloporteur.

La mise en œuvre d'un canal de refroidissement au sein même du corps de la sphère intégrante permet de bien contrôler la température et plus particulièrement d'évacuer de manière efficace la chaleur générée par les sources de lumière disposées à l'intérieur de la chambre d'intégration.

Selon une caractéristique optionnelle, le corps comprend au moins deux demi-corps complémentaires qui comprennent chacun une partie de la chambre d'intégration et au moins un canal de refroidissement.

Un tel mode de réalisation permet de faciliter le montage et la maintenance de la sphère intégrante notamment pour la réalisation du revêtement de la surface interne de la chambre d'intégration.

Selon une autre caractéristique optionnelle, un canal de refroidissement s'étend à l'intérieur du corps sur une partie au moins de la périphérie de la chambre d'intégration.

La position d'une partie du canal de refroidissement à proximité immédiate de la surface interne de la chambre d'intégration permet d'optimiser les échanges thermiques avec cette dernière

Selon encore une autre caractéristique optionnelle, le corps de sphère intégrante comprend au moins une chambre de refroidissement qui est raccordée au canal de refroidissement, qui s'étend sur une partie au moins de la périphérie de la chambre d'intégration.

La mise en œuvre d'une telle chambre de refroidissement à la périphérie de la chambre d'intégration contribue à augmenter la surface de contact entre le fluide caloporteur et la paroi délimitant la chambre d'intégration.

Selon une variante de cette caractéristique, la chambre de refroidissement définit avec une paroi de la chambre d'intégration une structure de type double peau.

Selon une autre variante de cette caractéristique, la chambre de refroidissement comprend au moins une structure perméable au fluide caloporteur reliant deux faces internes opposées de la chambre de refroidissement.

La mise en œuvre de la structure perméable reliant les deux faces internes opposées de la chambre de refroidissement permet d'augmenter la surface de contact entre le fluide caloporteur et le corps de la sphère intégrante selon l'invention.

Dans le cadre de cette variante, la structure perméable peut être réalisée de toute manière appropriée comme sous la forme, par exemple, d'ailettes définissant un labyrinthe de circulation du fluide caloporteur ou encore sous la forme d'une structure maillée ou poreuse perméable au fluide caloporteur.

Selon une caractéristique optionnelle, la chambre d'intégration est partiellement étanche au gaz.

Selon une autre caractéristique optionnelle, la sphère comprend au moins un canal de gestion de l'atmosphère interne de la chambre d'intégration.

La possibilité de contrôler la nature de l'atmosphère interne de la chambre d'intégration permet de diminuer l'hygrométrie de cette dernière et notamment de pouvoir descendre la température sous le point de rosée quand la sphère est utilisée à l'air.

Selon une caractéristique optionnelle, le corps de la sphère intégrante est réalisé dans un matériau thermo-conducteur.

Selon une forme de réalisation préférée, le corps de la sphère intégrante est fabriqué par fabrication additive.

Selon une autre caractéristique optionnelle, l'une des fenêtres de la sphère intégrante est destinée à la mise en place d'une source de lumière et le corps comprend au niveau de cette fenêtre un siège de montage d'une douille de support d'une lampe constitutive de la source de lumière.

La présence d'un tel siège de montage au niveau du corps de la sphère intégrante permet de faciliter la mise en place et la maintenance de sources de lumière.

Selon une variante de cette caractéristique, la sphère intégrante comprend une douille de support d'une lampe, cette douille étant adaptée de manière amovible sur le siège de montage.

Selon une autre variante de cette caractéristique, la douille comprend un corps comprenant au moins deux blocs de connexion chacun destiné à recevoir une broche d'alimentation de la lampe.

Selon une forme préférée de réalisation de cette variante, chaque bloc de connexion comprend un canal de connexion destiné à recevoir une broche d'alimentation de la lampe et équipé d'un mors de serrage de la broche asservi en position de serrage par un ressort complété par une vis de pression adaptée pour immobiliser de manière réversible le mors en position de serrage de la broche d'alimentation.

Selon une autre variante de cette caractéristique, le corps de la douille est réalisé en matériau thermo-conducteur et électriquement isolant.

Les différentes caractéristiques, variantes et formes de réalisation peuvent être associées les unes avec les autres selon diverses combinaisons dans la mesure où elles sont compatibles entre elles.

Par ailleurs, diverses autres caractéristiques de l'invention ressortent de la description qui va suivre, donnée uniquement à titre d'exemple non limitatif, et faite en référence aux dessins dans lesquels :
La figure 1 est une perspective schématique d'une sphère intégrante selon invention.
La figure 2 est une coupe schématique de la sphère intégrante illustrée à la figure 1 selon le plan II-II de cette dernière.
La figure 3 est une perspective partiellement arrachée d'un demi corps supérieur de la sphère intégrante illustrée à la figure 1.
La figure 4 est une perspective schématique d'une douille portant une ampoule destinée à former une source lumineuse équipant la sphère intégrante telle qu'illustré à la figure 1.
La figure 5 est une perspective analogue à la figure 4 sur laquelle un capot de la douille a été retiré de manière à en montrer une partie de l'intérieur.
La figure 6 est une élévation schématique d'une lampe destinée à former une source lumineuse pour la sphère intégrante illustrée à la figure 1.
La figure 7 est une coupe schématique d'un bloc de connexion constitutif de la douille illustrée aux figures 4 et 5.

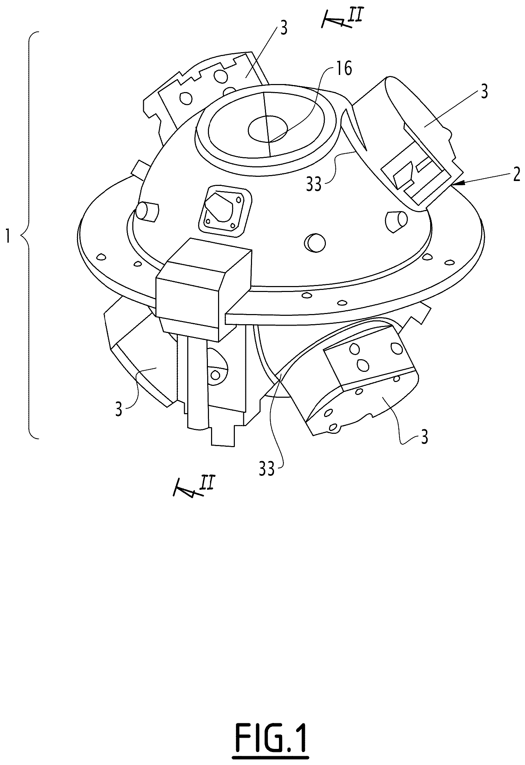

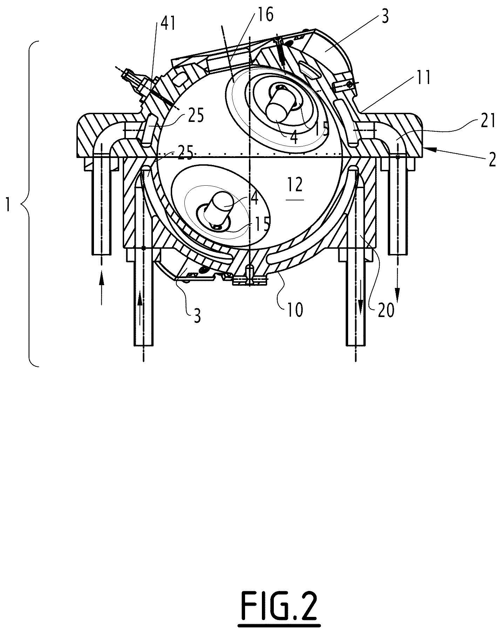

Une sphère intégrante, telle qu'illustrée aux figures 1 et 2 et désignée dans son ensemble par la référence 1, comprend un corps 2 équipé d'au moins une et, selon l'exemple illustré, de quatre douilles 3 chacune pourvue d'une source de lumière formée par une ampoule 4.

Dans le cas présent, le corps 2 comprend deux demis corps, inférieur 10 et supérieur 11, qui sont complémentaires et qui délimitent ensemble une chambre d'intégration 12. Ainsi, le demi corps inférieur 10 et le demi corps supérieur **11** forment deux demies coquilles qui assemblées constituent la sphère intégrante creuse 1.

La chambre d'intégration 12 présente, selon l'exemple illustré, une forme sphérique ou sensiblement sphérique, étant entendu qu'elle pourrait présenter une autre forme appropriée en fonction des applications.

Le corps 2 comprend au moins deux et, selon l'exemple illustré, cinq fenêtres d'accès à l'intérieur de la chambre d'intégration 12 dont trois seulement sont visibles à la figure 2. Dans le cas présent, quatre fenêtres 15 sont destinées à la mise en place d'une ampoule 4 constitutive d'une source de lumière tandis que la cinquième fenêtre 16 est destinée à permettre une sortie de la lumière émise par les ampoules 4 après rétrodiffusion sur la paroi de la chambre d'intégration 12.

À cet égard, il doit être noté que la paroi de la chambre de l'intégration 12 est recouverte d'un revêtement réfléchissant et diffusant adapté à la nature du rayonnement lumineux issu des sources de lumière 4. Ainsi dans le cadre d'un rayonnement dans le spectre visible il sera, par exemple, utilisé d'une peinture blanche à base de sulfate de baryum tandis que dans le cadre d'un rayonnement dans le domaine infrarouge il sera utilisé un revêtement à base d'or. L'homme du métier sachant adapter le revêtement réfléchissant à la nature du rayonnement lumineux mis en œuvre, il n'est pas nécessaire de décrire plus avant les variantes possibles dans le choix du revêtement couvrant la surface intérieure de la chambre d'intégration 12.

Conformément à une caractéristique essentielle de l'invention, le corps 2 de la sphère intégrante comprend au moins un canal de refroidissement pour la circulation d'un fluide caloporteur. Dans le cas présent, le corps 2 comprend deux canaux 20 et 21 respectivement aménagés dans le demi-corps inférieur 10 et le demi-corps supérieur 11. Afin de permettre un contrôle optimal de la température au sein de la chambre d'intégration 12 et plus particulièrement évacuer la chaleur produite par des sources lumineuses 4, chaque canal 20, 21 comprend au moins une portion qui s'étend sur une partie au moins de la périphérie de la chambre d'intégration 12 comme le montre plus particulièrement la figure 2.

L'objectif est alors de maximiser, autant que faire se peut, la surface d'échange entre la paroi périphérique de la chambre d'intégration 12 et chaque canal 20, 21. Cet objectif peut être atteint de différentes façons comme, par exemple, en réalisant au sein de chaque canal 20, 21 un réseau de canaux secondaires qui s'étendent sur une grande partie de périphérie de la paroi de la chambre d'intégration 12 à l'extérieur de cette dernière. Les canaux sont alors réalisés de manière que l'épaisseur de paroi qui sépare l'intérieur de chaque canal 20, 21 de la face périphérique de la chambre d'intégration 12 soit aussi réduite que possible, en tenant compte des contraintes mécaniques auxquelles doit résister l'ensemble du système et plus particulièrement le corps 2 et ses éléments constitutifs.

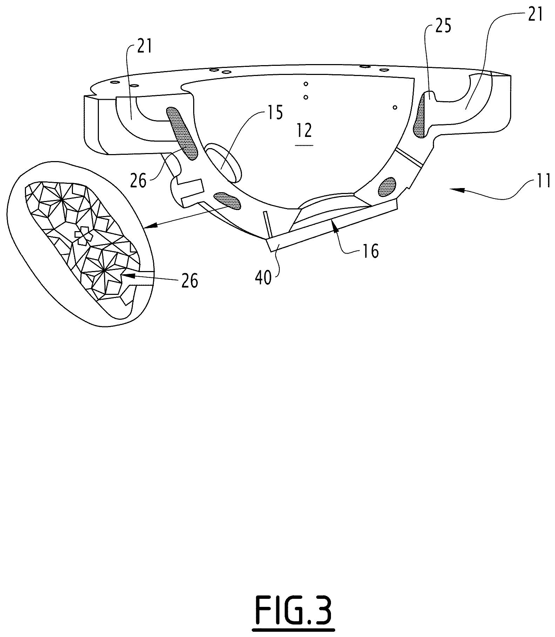

Dans une forme de réalisation préférée et comme cela est visible aux figures 2 et 3, chaque canal 20, 21 comprend une chambre de refroidissement 25 qui s'étend sur une partie au moins de la périphérie de la portion correspondante de la chambre d'intégration 12. L'objectif de cette chambre de refroidissement 25 est de réaliser une double peau de refroidissement autour de la chambre d'intégration 12. Ainsi, la chambre de refroidissement 25 défini un volume de circulation du fluide de refroidissement qui présente une forme globalement analogue à celle de la paroi périphérique de la chambre d'intégration 12. Comme cela a été dit précédemment, la chambre de refroidissement 25 est aménagée, dans chacun des demi corps 10, 11 correspondant, de manière que l'épaisseur de paroi qui sépare l'intérieur de la chambre de refroidissement 25 de la face périphérique de la chambre d'intégration 12 soit aussi réduite que possible en tenant compte, bien entendu, des contraintes mécaniques.

Dans une forme, préférée mais non exclusive, de réalisation, afin d'augmenter la surface d'échange entre le corps 2 ou les demis corps 10, 11 qui le constituent et le fluide caloporteur y circulant, la chambre de refroidissement 25 comprend une structure d'échange 26, perméable au fluide caloporteur, reliant les deux faces internes opposés de ladite chambre de refroidissement 25. Cette structure d'échange 26 est réalisée dans le même matériau que le corps 2 et, de manière préférée, forme un ensemble monobloc avec ce dernier de manière que la continuité de matière garantisse une bonne conductivité thermique entre cette structure d'échange 26 et le reste du corps 2.La structure d'échange 26 peut présenter différentes formes en fonction notamment de la nature du fluide caloporteur utilisé. Ainsi, la structure d'échange 26 peut être formée par des ailettes reliant les parois opposées de la chambre de refroidissement 25. Dans le cas présent, et comme le montre le détail de la figure 3, la structure d'échange 26 est formée par un ensemble d'éléments prismatiques constituant une structure poreuse susceptible d'être traversée par le fluide caloporteur.

Afin de garantir la continuité entre la structure d'échange 26 et le corps 2 ou les demis corps 10, 11 qui le constituent, le corps 2 est, de préférence, fabriqué selon un procédé de fabrication additive, également appelé impression 3D, avec des matériaux ayant une bonne conductivité thermique, comme par exemple l'aluminium, l'acier inoxydable, le cuivre ou encore des céramiques. Un tel mode de fabrication permet en outre de garantir une parfaite étanchéité des circuits de refroidissement formés par les canaux 20, 21 et les chambres de refroidissement 25.

Ainsi, dans des exemples, le corps 2, ou chaque demi corps 10 et 11, possède une chambre de refroidissement 25 délimitée entre une peau interne et une peau externe, la structure d'échange 26 s'étendant entre la peau interne et la peau externe en étant réalisée en une seule pièce de matière (i.e. monobloc) avec la peau interne et la peau externe.

Afin d'optimiser le refroidissement de l'ensemble du système constituant la sphère intégrante et comprenant le corps 2 équipé des sources de lumière, l'invention propose de mettre en œuvre des douilles 3 spécifiques pour porter et assurer l'alimentation électrique des lampes 4.

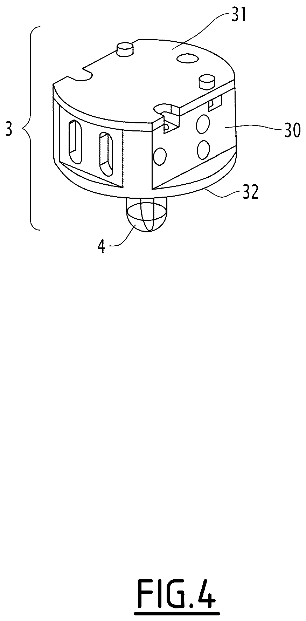

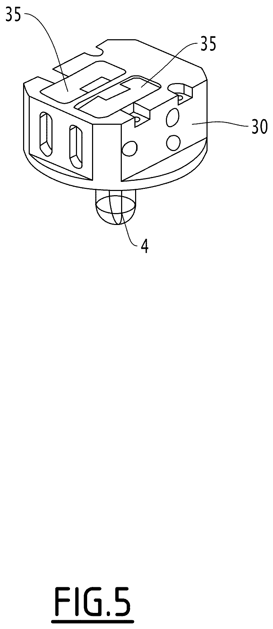

Comme cela ressort des figures 4 et 5, chaque douille 3 comprend un corps de douille 30 fermé par un capot 31. Le corps de douille 30 présente à sa base une platine de fixation 32 qui possède une forme complémentaire de celle d'un siège de montage 33 aménagé sur le corps 2 ou le demi-corps correspondant 10 ou 11 au niveau de chaque fenêtre 15 de mise en place d'une source de lumière. La complémentarité de la platine 32 et du siège de montage 33 est réalisé de manière que la douille 3 forme un moyen de fermeture de la chambre d'intégration 12. Bien entendu, la platine 32 et le siège de montage 33 sont configurés pour permettre une adaptation amovible de la douille 3 sur le corps 2 de la sphère intégrante.

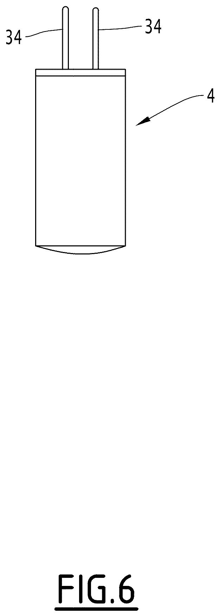

Chaque douille 3 comprend des moyens d'alimentation électrique de la source de lumière 4 qu'elle supporte. Dans le cas présent et comme le montre la figure 6, chaque source de lumière 4 est formée par une ampoule comprenant deux broches d'alimentation 34 droites, également appelées « pins ». Les moyens d'alimentation comprennent alors deux blocs de connexion 35, un pour chaque broche 34.

Chaque bloc de connexion 35 est réalisé dans un matériau électriquement conducteur, tel que du cuivre, tandis que le corps de douille 30 de la douille 3 est, de préférence, réalisé dans un matériau thermo conducteur mais électriquement isolant tel qu'une céramique de type nitrure d'aluminium.

Dans des exemples, le siège 33 de montage de la douille 3 est composé d'un matériau thermo-conducteur et isolant électriquement. Cette caractéristique présente un avantage non négligeable pour refroidir la sphère en comparaison aux douilles traditionnellement utilisées dont le siège de montage n'est pas thermiquement conducteur.

De préférence, en fonctionnement, le siège 33 de montage de la douille 3 est refroidie thermiquement par la sphère intégrante 1.

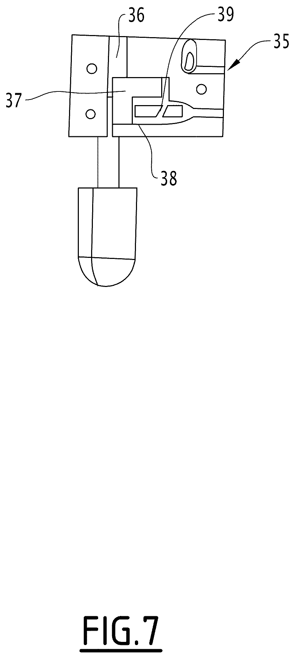

Comme le montre la figure 7, chaque bloc de connexion 35 comprend un canal de connexion 36 destiné à recevoir une broche d'alimentation 34. Le canal de connexion 36 est équipé d'un mors de serrage 37 destiné à venir presser la broche 34 contre une paroi du canal 36. Selon l'exemple illustré le mors de serrage 37 est asservi en position de serrage par un ressort 38. Par asservi en position de serrage, il convient de comprendre que le ressort 38 pousse le mors 37 en direction de la paroi du canal 36 de manière à serrer la broche 34 quand elle s'y trouve. Le ressort 38 est complété par une vis de pression 39 qui est adapté pour immobiliser de manière réversible le mors en position de serrage de la broche 34 et ainsi assurer un parfait contact électrique entre cette dernière et le bloc de connexion 35.

La mise en œuvre du ressort 38 permet de faciliter le montage de la lampe 4 sur la douille 3 dans la mesure où la pression exercée par le ressort permet d'immobiliser la lampe sur la douille avant serrage de la vis correspondante.

Un siège 33 de montage utilisant un système de mors comprenant une vis de pression 39 et un ressort de rappel 38 permet notamment de s'adapter à différentes types (ou entraxes) de douilles 3 contrairement aux sièges de montage du commerce nécessitant un achat de douilles spécifiques.

Lors de la mise en œuvre de la sphère intégrante 1 et de ses éléments constitutifs tels que décrit précédemment, les douilles 3 sont, avant leur montage, équipées des lampes 4 et, ensuite, fixées sur le corps 2 avec interposition d'une pâte ou joint thermique compatible avec une mise au vide. Cette pâte ou ce joint thermique assure une bonne conduction de la chaleur entre chaque douille 3 et le corps 2 et permet ainsi une évacuation efficace de la chaleur de chaque douille 3 par le circuit de refroidissement de la sphère intégrante 1.

Il est à noter qu'une telle pâte ou joint thermique est, de préférence, mis en œuvre au niveau de toutes les surfaces de jonction des différents constituants de la sphère intégrante 1 selon l'invention.

Comme cela a été indiqué précédemment, les douilles 3 assurent une fermeture des fenêtres 15. Il est alors possible de contrôler l'atmosphère interne de la chambre d'intégration 12 au moyen, par exemple, d'une injection de gaz continue, et, à cet effet, le corps 2 comprend un canal 41 destiné à être raccordé à une unité non représentée adaptée pour assurer cette gestion. Cette unité de gestion de l'atmosphère interne de la chambre d'intégration 12 peut, par exemple mais non exclusivement, comprendre une source de gaz purifié.

Lors de la mise en œuvre de la sphère intégrante 1 selon l'invention et telle que décrite précédemment, le circuit de refroidissement, formé notamment par les canaux 20, 21, est raccordé à une unité de refroidissement, non représentée, qui assure la fourniture et la circulation du fluide caloporteur qui peut être de toute nature appropriée liquide ou gazeuse selon les applications. Le fluide caloporteur est alors choisi en fonction de la puissance et des conditions d'utilisation.

Selon l'exemple décrit précédemment, le corps 2 de la sphère intégrante 1 est réalisé en deux parties. Toutefois, la mise en œuvre d'une fabrication par fabrication additive permet d'envisager une réalisation de ce corps 2 en un seul bloc.

Bien entendu, diverses autres formes de réalisation de la sphère intégrante selon l'invention peuvent être envisagées dans le cadre des revendications annexées.

## Revendications

1. Sphère intégrante comprenant un corps (2) délimitant une chambre d'intégration et étant pourvu d'au moins deux fenêtres (15, 16) d'accès à la chambre d'intégration (12) depuis l'extérieur du corps (2), **caractérisée en ce que** le corps (2) comprend au moins un canal de refroidissement (20, 21) pour la circulation d'un fluide caloporteur.

2. Sphère intégrante selon la revendication 1, **caractérisée en ce que** le corps (2) comprend au moins deux demi-corps (10, 11) complémentaires qui comprennent chacun une partie de la chambre d'intégration (12) et au moins un canal de refroidissement (20, 21).

3. Sphère intégrante selon la revendication 1 ou 2, **caractérisée en ce qu'**au moins un canal de refroidissement s'étend à l'intérieur du corps (2) sur une partie au moins de la périphérie de la chambre d'intégration (12).

4. Sphère intégrante selon l'une des revendications 1 à 3, **caractérisée en ce qu'**elle comprend au moins une chambre de refroidissement (25) qui est raccordée au canal de refroidissement (20, 21), et qui s'étend sur une partie au moins de la périphérie de la chambre d'intégration (12).

5. Sphère intégrante selon la revendication précédente, **caractérisée en ce que** la chambre de refroidissement (25) définit avec une paroi de la chambre d'intégration (12) une structure de type double peau.

6. Sphère intégrante selon la revendication 4 ou 5, **caractérisée en ce que** la chambre de refroidissement (25) comprend au moins une structure d'échange (26) perméable au fluide caloporteur reliant deux faces internes opposées de la chambre de refroidissement (25).

7. Sphère intégrante selon la revendication 6, **caractérisée en ce que** la structure d'échange (26) comprend une structure maillée ou poreuse perméable au fluide caloporteur.

8. Sphère intégrante selon l'une des revendications précédentes, **caractérisée en ce que** la sphère (1) comprend au moins un canal de gestion de l'atmosphère interne de la chambre d'intégration (12)

9. Sphère intégrante selon l'une des revendications précédentes, **caractérisée en ce que** le corps (2) est réalisé dans un matériau thermo-conducteur.

10. Sphère intégrante selon l'une des revendications précédentes **caractérisées en ce que** le corps (2) est fabriqué par fabrication additive.

11. Sphère intégrante selon l'une des revendications précédentes, **caractérisée en ce que** l'une des fenêtres (15) est destinée à la mise en place d'une source de lumière (4) et en que le corps (2) comprend au niveau de cette fenêtre un siège (33) de montage d'une douille (3) de support d'une lampe constitutive (4) de la source de lumière.

12. Sphère intégrante selon la revendication précédente, **caractérisée en ce qu'**elle comprend une douille (3) de support d'une lampe (4), cette douille étant adaptée de manière amovible sur le siège de montage (33).

13. Sphère intégrante selon la revendication 11 ou 12, **caractérisé en ce que** la douille (3) comprend un corps (30) comprenant au moins deux blocs de connexion (35) chacun destiné à recevoir une broche (34) d'alimentation de la lampe (4).

14. Sphère intégrante selon la revendication 13, **caractérisée en ce que** chaque bloc de connexion (35) comprend un canal de connexion (36) destiné à recevoir une broche (34) d'alimentation de la lampe et équipé d'un mors de serrage (37) de la broche asservi en position de serrage par un ressort (38) complété par une vis de pression (39) adaptée pour immobiliser de manière réversible le mors (37) en position de serrage de la broche d'alimentation (34).

15. Sphère intégrante selon l'une des revendications 12 à 14, **caractérisée en ce que** le corps de la douille est réalisé en matériau thermo-conducteur et électriquement isolant.
